# EUROPEAN PATENT SPECIFICATION

(11) **EP 4 324 322 B1**
(45) Date of publication and mention of the grant of the patent: **30.07.2025**
(21) Application number: 23185300.3
(22) Date of filing: 14.06.2017
(51) Int. Cl.: H01H 27/06, A01D 34/00, A01D 75/00, A01D 34/68, A01D 34/82

(54) **POWER DEVICE**
ELEKTROGERÄT
APPAREIL ÉLECTRIQUE

(30) Priority: 14.06.2016 CN 201610419586; 14.06.2016 CN 201610413596; 14.06.2016 CN 201610412240; 14.06.2016 CN 201610412321
(43) Date of publication of application: 21.02.2024
(62) Divisional of application: 17812715.5
(73) Proprietor: Globe (Jiangsu) Co., Ltd., Changzhou, Jiangsu 213023 (CN)
(72) Inventor: JIANG, Feng, Changzhou, 213023 (CN)
(74) Representative: Bergenstråhle & Partners AB

(56) References cited:
- EP-A1- 1 564 424
- US-A- 6 082 083
- US-A1- 2010 025 124

## Description

### Technical field

The present invention relates to a mechanical equipment, and more particularly to a control panel, a self-propelled switch apparatus, and a power device.

### Background

Currently, the garden tool can be used either in self-propelled walking mode, or in manually pushed or pulled walking mode, which cannot meet people's usage requirements.

US patent 20100025124A discloses speed-control means for a walk-with vehicle or other walk-with apparatus, said means comprising a handle, a reference member relative to which the handle has a forward range of movement in which it can move in a forward direction to control increase in forward speed of the apparatus and incrementally backwards to control reduction in the forward speed, and means to convert positions of the handle into electric signals to control the speed. This may be termed "an intuitive movement handle" since a forward movement of the handle causes increase in forward speed of the apparatus and an incremental backwards movement of the handle from any particular forward speed position causes a reduction in forward speed. Said speed-control means are adapted for mechanical connection to said apparatus.

### Summary of invention

An object of the present application is to provide a power device. This is achieved with power device, comprising:
a machine body;
a housing, a first motor and a second motor located in the housing, the first motor is adapted to provide self-propelled power, and the second motor is adapted to provide working power for the power device; and
a control panel, the control panel including:
   a pushing rod connected to the machine body, a panel assembly reciprocatingly sliding on the pushing rod; and
   a sliding potentiometer connected to the first motor;
   wherein the sliding potentiometer comprises a potentiometer base and a sliding needle movably connected to the potentiometer base, and wherein the first motor is configured to adjust the rotation speed to adjust the self-propelling speed of the power device according to the moving distance of the sliding needle on the potentiometer base, wherein the control panel comprises a guideway fixed on the pushing rod, and the panel assembly sliding along the guideway, wherein the acceleration of the sliding needle as moving within [0, s1] is less than the acceleration of the sliding needle as moving within [s1, s2], wherein S1 represents a relative displacement distance between the panel assembly and the guideway as a preset first distance, and S2 represents a relative displacement distance between the panel assembly and the guideway as a maximum distance. The invention is set out in the appended set of claims.

### Brief description of drawings

In order to more clearly illustrate the technical solutions in the embodiments of the present invention, the drawings used in the description of the embodiments will be briefly described below. It is obvious that the drawings in the following description are only partial embodiments of the present invention. For those skilled in the art, other drawings may be obtained according to these drawings without any creative work, in which:
FIG. 1 is a schematic view of a control panel in accordance with a preferred embodiment of the present invention;
FIG. 2 is an exploded view of a self-locking assembly and a first switch unit in accordance with the preferred embodiments of the present invention;
FIG. 3 is a top view of the self-locking assembly and the first switch unit as shown in FIG. 2;
FIG. 4 is a cross-sectional view of the self-locking assembly and the first switch unit as shown in FIG. 2;
FIG. 5 is a schematic view of the location of a positioning hole in accordance with the preferred embodiments of the present invention;
FIG. 6 is a schematic view of the internal structure of a first switch unit in accordance with the preferred embodiments of the present invention;
FIG. 7 is a schematic view of a first starting unit in accordance with the preferred embodiments of the present invention;
FIG. 8 is a schematic view of the first starting unit in shutdown state as shown in FIG. 7;
FIG. 9 is a schematic view of the location of a pull rod as shown in FIG. 7;
FIG.10 is a schematic view of the first starting unit in turn on state as shown in FIG. 7;
FIG. 11 is a cross-sectional view of a second starting unit in accordance with the preferred embodiments of the present invention;
FIG.12 is a schematic view of a connecting assembly as shown in FIG. 11;
FIG.13 is a schematic view of the second starting unit in turn on state as shown in FIG. 11;
FIG.14 is a schematic view of a power device in accordance with the preferred embodiments of the present invention;
FIG.15 is a schematic view of a sliding potentiometer in accordance with the preferred embodiments of the present invention;
FIG. 16 is an exploded view of a reset apparatus in the present embodiment;

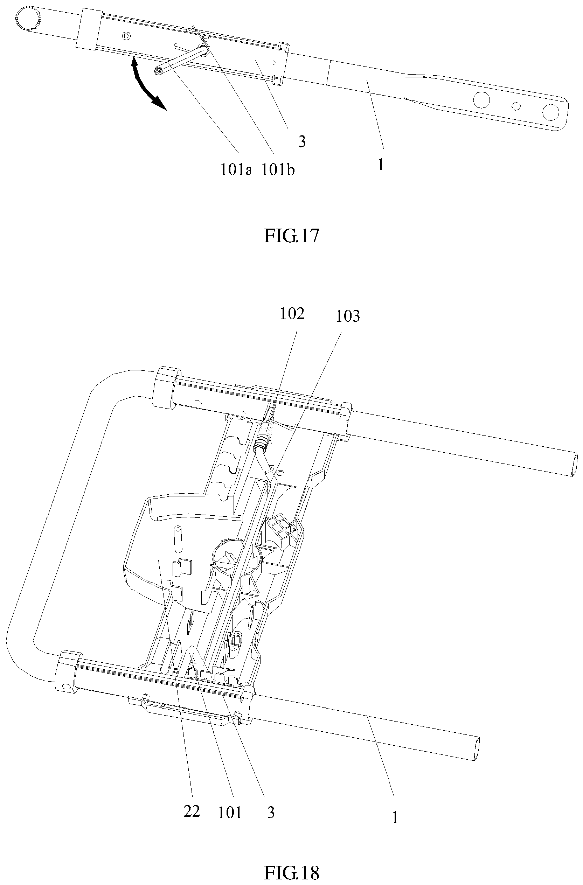

FIG. 17 is a schematic view of the reset apparatus in moving state as shown in FIG. 16;
FIG.18 is a schematic view of a lower panel of the panel assembly in accordance with the preferred embodiments of the present invention;
FIG.19 is a schematic view of a lawn mower in accordance with the preferred embodiments of the present invention;
FIG.20 is a schematic view of one control method for the lawn mower in accordance with the preferred embodiments of the present invention; and
FIG.21 is a schematic view of another control method for the lawn mower in accordance with the preferred embodiments of the present invention.

Reference numerals in the Figures: 1, push rod; 2, panel assembly; 21, upper panel; 22, lower panel; 3, guideway; 41, lock knob; 42, lock shaft; 51, self-propelled key; 52, buckle slot; 53, positioning hole; 54, self-propelled key knob; 55, key reset spring; 71, starting switch; 72, starting key; 721, movable contact block; 73, pull rod; 731, compression block; 732, gear; 74, elastic connector; 81, motor rotation switch; 82, button unit; 821, pressing head; 821a, pressing head button; 822, button reset spring; 83, connecting assembly; 831, sliding plate; 832, hanging plate; 832a, convex structure; 833, hanging plate torsion spring; 84, operating assembly; 841, pulling plate; 841a, rack; 841b, clamping groove; 842, pulling plate reset spring; 13, power device; 131, housing; 132, first motor; 133, second motor; 134, self-propelled switch; 9, sliding potentiometer; 91, potentiometer base; 92, sliding needle; 101, reset rod; 101a, main rod; 101b, auxiliary rod; 102, reset rod return spring; 103, chuck.

### Description of embodiments

Currently, the garden tool can only be used in self-propelled walking mode, or can only walk by manually pushed or pulled, which can not meet people's usage requirements.

In view of the above problems, an embodiment of the present invention discloses a control panel comprising lock assemblies connected to a panel assembly. The lock assemblies can lock the panel assembly on a push rod. It also can unlock the panel assembly and the push rod, so that a device in which the control panel is disposed, can be switched between a manual-power driving mode and a self-propelled driving mode, which meet people's usage requirements.

In order to make the above-mentioned objects, features and advantages of the present invention more obvious and easy to understand, references will be made to the figures to describe the embodiments of the present disclosure in detail.

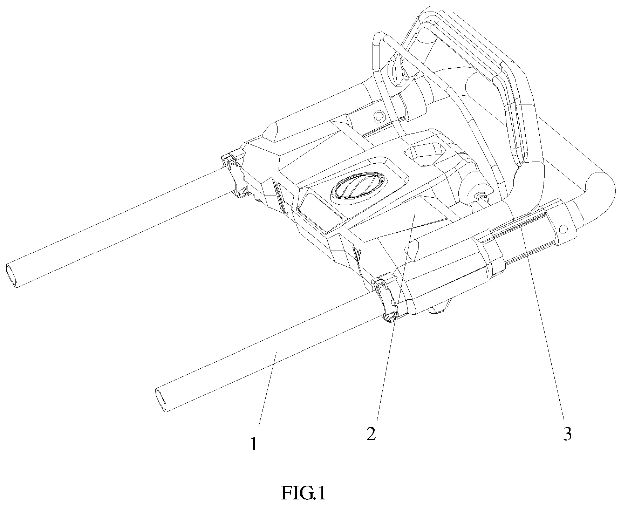

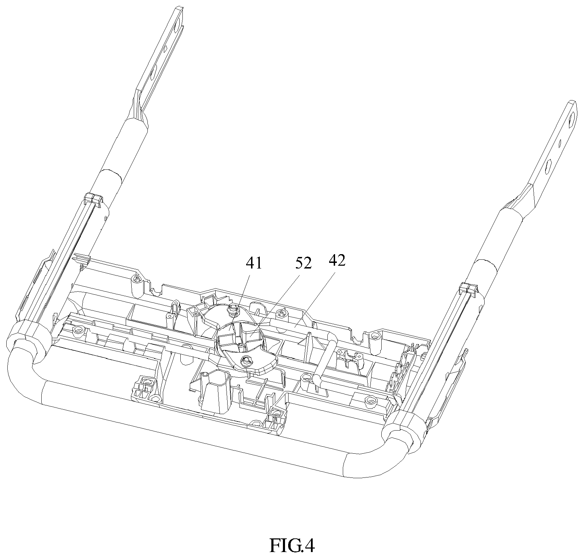

Referring to FIGS. 1-5, the embodiment of the present invention discloses the control panel. The control panel comprises the push rod 1 connected to a machine body, the panel assembly 2 reciprocatingly sliding along the push rod 1 and the lock assemblies connected to the panel assembly 2. The lock assemblies can either lock the panel assembly 2 on the push rod 1, or unlock the panel assembly 2 from the push rod 1.

In this preferred embodiment, the panel assembly 2 comprises an upper panel 21 and a lower panel 22 connected to the upper panel 21. The push rod 1 can be a U-shaped push rod.

In this preferred embodiment, the push rod 1 are usually provided with guideways 3 at opposite sides thereof with the panel assembly 2 reciprocatingly sliding on the guideways 3.

In one embodiment of the present invention, the lock assemblies comprises a lock knob 41 connected to the panel assembly 2, and at least one lock shaft 42 connected to the lock knob 41 and clamped with the push rod 1.

When the lock shaft 42 enters into the push rod 1, the panel assembly 2 will be locked on the push rod 1. At this time, the device in which the control panel is disposed, can only work in the manual-power driving mode. When the lock shaft 42 exits from the push rod 1, the panel assembly 2 can automatically slide along the push rod 1, that is, the panel assembly 2 is unlocked. At this time, the device in which the control panel is disposed, can work in self-propelled driving mode.

In one embodiment of the present invention, the lock shafts 42 can be arranged on two sides of the lock knob 41. A plurality of push rod holes can be arranged at the corresponding positions of the guideways 3. The lock shafts 42 can lock the panel assembly 2 in different positions of the push rod 1 by inserting in the corresponding push rod holes of the push rod 1.

In one embodiment of the present invention, the panel assembly 2 comprises a first switch unit connected with the lock knob 41. The first switch unit is adapted to control the lock shaft 42 to lock or unlock the panel assembly 2 through the lock knob 41. When the first switch unit controls the lock shaft 42 to lock the panel assembly 2 through the lock knob 41, the first motor for providing the self-propelled power for the device with the control panel is closed. When the first switch unit controls the lock shaft 42 to unlock the panel assembly 2 through the lock knob 41, the first motor for providing the self-propelled power for the device with the control panel is started, and the device can work in self-propelled driving mode.

The first switch unit is configured to prevent the panel assembly 2 from unlocking or locking by mistake. The accident caused by unlocking or locking the panel assembly 2 through directly operating the lock knob 41 can be avoided. The safety of the equipment is improved consequently.

In one embodiment of the present invention, the first switch unit comprises a self-propelled key 51 connected with the lock knob 41. The self-propelled key 51 is clamped with the lock knob 41, and the lock knob 41 is driven to rotate by rotating the self-propelled key 51, thereby enabling the lock shaft 42 to unlock the panel assembly 2 through exiting from the push rod 1.

In one embodiment of the present invention, a buckle body (not shown) is assembled on the self-propelled key 51. A buckle slot 52 engaged with the buckle body is arranged on the lock knob 41. When the self-propelled key 51 is moved downwards and rotated, the buckle body can be clamped in the buckle slot 52. The lock knob 41 can be driven to rotate by continually rotating the self-propelled key 51.

In the preferred embodiment, both of the cross sections of the buckle body and the buckle slot 52 can be cross-shaped, or zigzag, or star-shaped. That is, no limitation on the cross-sectional shape is required.

In one embodiment of the present invention, the first switch unit can further comprise a positioning assembly connected with the self-propelled key 51. The positioning assembly is adapted to fix the self-propelled key 51.

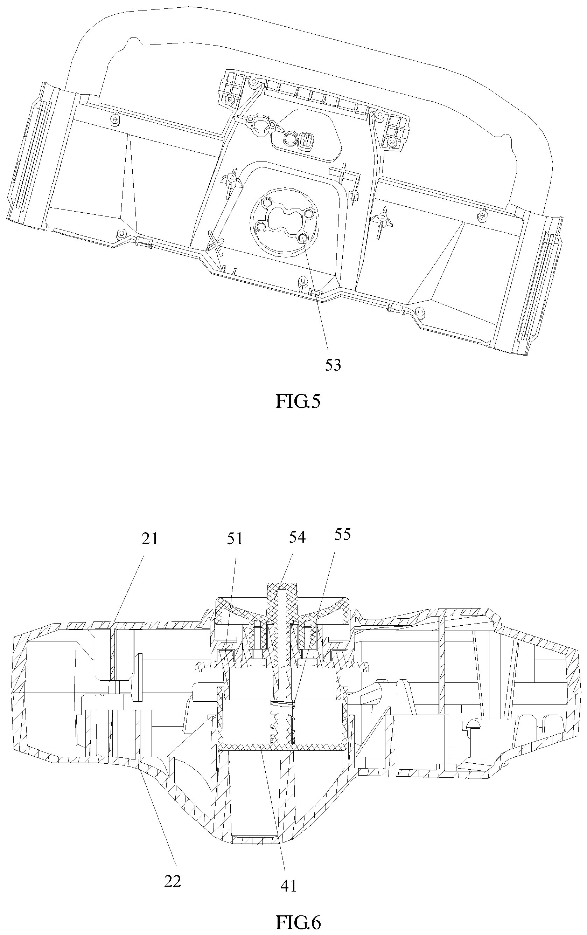

Referring to FIG. 5, in the preferred embodiment, the positioning assembly comprises a number of positioning holes 53 arranged on the panel assembly 2 and a number of location columns (not shown) arranged on the self-propelled key 51. The location columns are received within the positioning holes 53. The self-propelled key 51 is fixed by the engagement between the location columns and the positioning holes 53.

In the preferred embodiment, the quantity of the positioning holes 53 and the location columns are not restricted. Such as, the quantity of the location columns can be four, and the quantity of the location columns can be two.

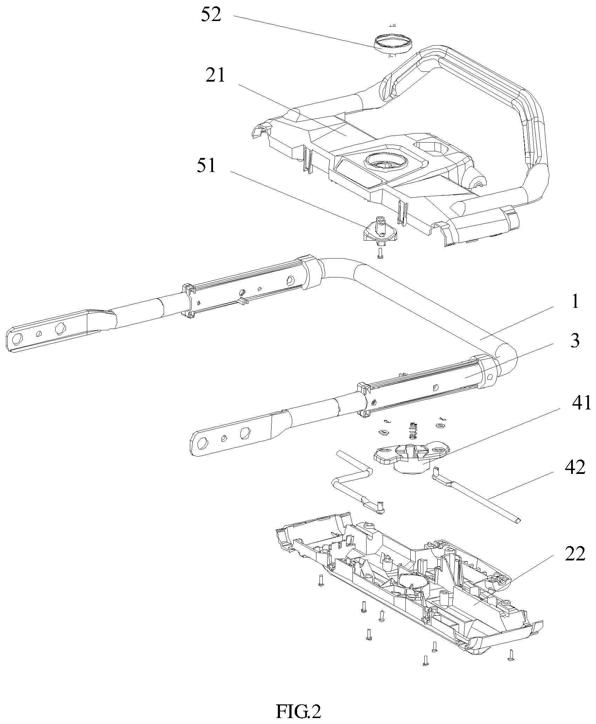

Referring to FIG. 2 and FIG. 6, in one embodiment of the present invention, the first switch unit can further comprise a self-propelled key knob 54 assembled on the self-propelled key 51. The self-propelled key 51 is driven to move up and down by the self-propelled key knob 54.

Referring to FIG. 6, in one embodiment of the present invention, the first switch unit can further comprise a key reset spring 55 sleeved on the self-propelled key knob 54. The key reset spring 55 is adapted to reset the location of the self-propelled key 51.

During applying the present invention, the self-propelled key 51 can be driven to move downwards to thereby separating from the positioning holes 53 by pressing down the self-propelled key knob 54. The buckle body, on the bottom of the self-propelled key 51, can be driven to clamp in the buckle slot 52 of the lock knob 41 by rotating the self-propelled key knob 54. Then, the self-propelled key 51 is driven to rotate by continually rotating the self-propelled key knob 54, with the self-propelled key knob 54 rotating and with the left/right lock shafts 42, which connect with the self-propelled key knob 54, driven to compress and separate from the push rod 1 under the rotation of the self-propelled key knob 54. At this moment, the panel assembly 3 is unlocked and can freely slide on the push rod 1.

After releasing the self-propelled key knob 54, the self-propelled key 51 is ejected from the lock knob 41 under the action of the key reset spring 55. The self-propelled key 51 is inserted into the corresponding positioning holes 53 of the self-propelled key 51 through the positioning columns, then the device enters in the manual-power driving mode.

During applying the present invention, the lock knob 41 can be arranged on the lower panel 22. The self-propelled key knob 54 and the self-propelled key 51 can be arranged on the upper panel 21.

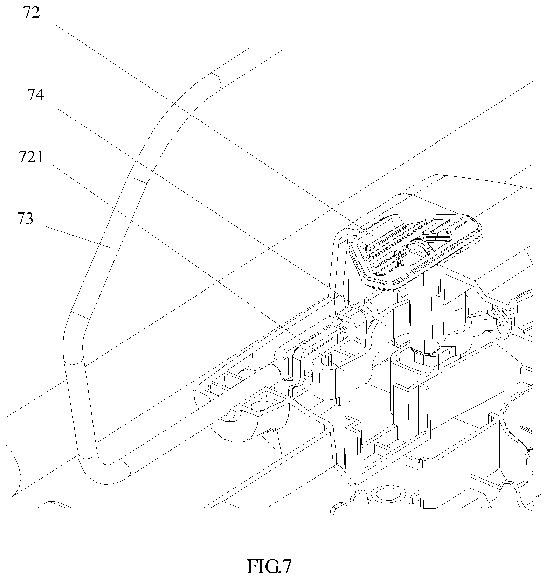

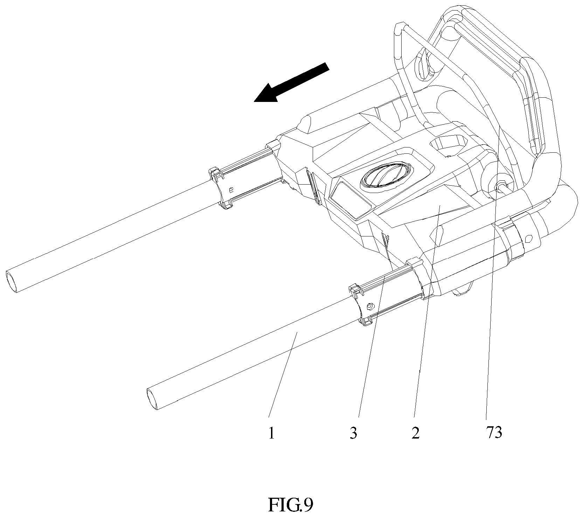

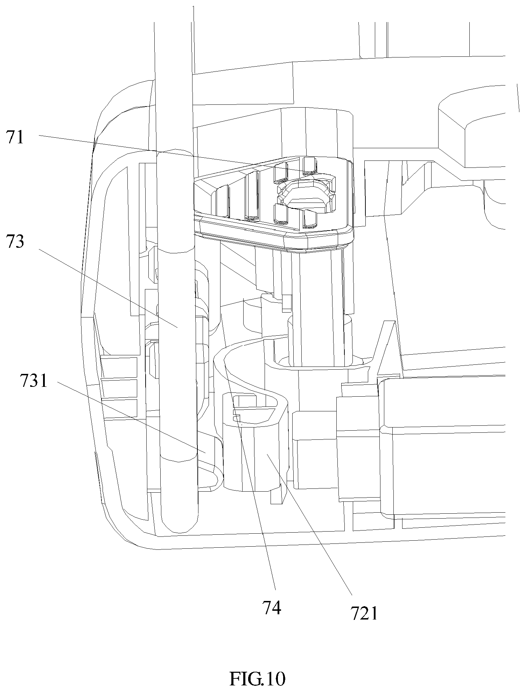

Referring to FIG.1 and FIGS.7-10, another embodiment of the present invention discloses the control panel comprising the panel assembly 2 and a starting switch 71 arranged on the panel assembly 2. The starting switch 71 is adapted to open or close the second motor provided power for the device in which the control panel is disposed.

A first starting unit is disposed on the panel assembly 2, which comprises a starting key 72 disposed on the panel assembly 2 and being moveable up and down, and a pull rod 73 movably connected to the panel assembly 2. When the starting key 72 moves to a bottom of the panel assembly 2, the bottom of the starting key 72 will touch and start the starting switch 71 under a push of the bottom of the pull rod 73. The starting switch 71 will be closed when the bottom of the starting key 72 is disconnected from the starting switch 71.

The first starting unit is arranged to avoid the accident caused by starting or closing the second motor through operating the starting switch 71 by mistake, and the safety of the device can be further improved.

In the preferred embodiment, the device can be a lawn mower, in which the control panel is disposed. The second motor can be a motor driving the cutter of the lawn mower to rotate. When the device is a snow sweeper, in which the control panel is disposed, the second motor can be a motor driving the impeller of the snow sweeper to rotate.

In one embodiment of the present invention, the pull rod 73 comprises a compression block 731 adapted for pushing the starting key 72 to touch the starting switch 71 as the pull rod 73 rotating. A distance between the starting switch 71 and the compression block 731 is larger than a displacement distance of the compression block 731 caused by the rotation thereof.

In one embodiment of the present invention, the starting key 72 comprises a movable contact block 721 in contact with the starting switch 71 pushed by the compression block 731. One end of the movable contact block 721 is movably connected to the starting key 72, and the other end is in a suspended form. The movable contact block 721 is pushed by the compression block 731 to contact the starting switch 71, thereby starting the starting switch 71.

In one embodiment of the present invention, the movable contact block 721 can be movably connected to the starting key 72 through an elastic connector 74. The elastic connector 74 can be a metal dome, or a spring.

During applying the present invention, the starting key 72 can pass through the upper panel of the panel assembly 2 and be disposed on the lower panel of the panel assembly 2. Both the pull rod 73 and the starting switch 71 can be assembled onto the lower panel of the panel assembly 2.

During applying the present invention, the starting switch 71 can be opened or closed by inserting the starting key 72 into the panel assembly 2. No limitation is required here.

When the starting key 72 is pulled out from the panel assembly 2 or is not pressed, the starting switch 71 will not be touched if operating the pull rod 73, since the compression block 731 of the pull rod 73 cannot contact with the movable contact block 721. When the starting key 72 is inserted into the panel assembly 2 or moves downwards to the bottom of the lower panel 22 of the panel assembly 2, the compression block 731 of the pull rod 73, can be in contact with the movable contact block 721 if operating the pull rod 73. Then, the movable contact block 721 can touch the starting switch 71 to thereby staring the starting switch 71, under the effect of the compression block 731 of the pull rod 73.

Referring to FIG. 2 and FIGS.11-13, the embodiment of the present invention discloses an automatic switching device comprising a push rod 1 connected to a machine body and a panel assembly 2 reciprocatingly sliding on the push rod 1. A motor rotation switch 81 is arranged in the panel assembly 2 and adapted for opening or closing the second motor provided power for the device.

A second starting unit is disposed on the panel assembly 2. The second starting unit can comprise a button unit 82, a connecting assembly 83, and an operating assembly 84, wherein:

The button unit 82 moves downwards to press the connecting assembly 83 to connect with the operating assembly 84. The connecting assembly 83 is driven to move and press on the motor rotation switch 81 by moving the operating assembly 84, so that the motor rotation switch 81 is triggered.

The second starting unit is configured to avoid the accident caused by starting or closing the second motor through operating the motor rotation switch 81 by mistake, and the safety of the device can be further improved.

In one embodiment of the present invention, the operating assembly 84 comprises a pull rod 73 movably connected to the panel assembly 2 and a pulling plate 841 driven by the pull rod 73. The button unit 82 comprises a pressing head 821 suitable for a pressing operation exerted thereon. The connecting assembly 83 comprises a sliding plate 831 movably connected with the panel assembly 2 and a hanging plate 832 movably connected with the sliding plate 831.

The pressing head 821 is arranged on the upper part of the hanging plate 832, one end of the hanging plate 832 is located on the upper part of the pulling plate 841.The pressing head 821 is pressed down to engage the hanging plate 832 and the pulling plate 841. The hanging plate 832 is driven to move by moving the pulling plate 841 driven by the pull rod 73, and the sliding plate 831 is driven to move along the panel assembly 2 to trigger the motor rotation switch 81 through the hanging plate 832.

In one embodiment of the present invention, the pull rod 73 is connected with the pulling plate 841. The pulling plate 841 is driven to move on the panel assembly 2 through translating the pull rod 73 on the panel assembly 2.

During applying the present invention, the pull rod 73 can be connected to the pulling plate 841 in a variety of ways. In one embodiment of the invention, the end of the pull rod 73 connected with the pulling plate 841 can be arranged with a gear 732, and the end of the pulling plate 841 connected with the pull rod 73 can be arranged with a rack 841a engaged with the gear 732. The pulling plate 841 can be driven to move by turning the pull rod 73 with the cooperation of the gear 732 and rack 841a.

During applying the present invention, the hanging plate 832 can be clamped with the pulling plate 841 in a variety of ways. In one embodiment of the invention, a clamping groove 841b can be arranged on the pulling plate 841. One end of the hanging plate 832 is hinged on the sliding plate 831, and the other end of the hanging plate 832 is provided with a convex structure 832a clamped to the clamping groove 841b. When the pressing head 821 is depressed, the clamping groove 841b on the pulling plate 841 can be driven to engage with the convex structure 832a on the hanging plate 832, thereby making the hanging plate 832 clamped with the pulling plate 841.

In one embodiment of the present invention, in order to facilitate receiving the pressing operation, a pressing head button 821a can be arranged and connected at the upper end of the pressing head 821. The pressing head 821 can be driven to move downwards by pressing the pressing head button 821a.

In one embodiment of the present invention, the button unit 82 can be further comprise a button reset spring 822 arranged between the pressing head 821 and the pressing head button 821a. The button reset spring 822 is arranged to reset the location of the pressing head button 821a.

In one embodiment of the present invention, the operating assembly 84 can be further comprise a pulling plate reset spring 842 arranged between the pulling plate 841 and the panel assembly 2. The pulling plate reset spring 842 is provided to reset the location of the pulling plate 841.

In one embodiment of the present invention, the connecting assembly 83 can be further comprise a hanging plate torsion spring 833 connected with the hanging plate 832. The hanging plate torsion spring 833 is arranged to reset the location of the hanging plate 832.

In the preferred embodiment, the button unit 82 can be arranged on the upper panel 21 of the panel assembly 2. The connecting assembly 83 and the motor rotation switch 81 can be arranged on the lower panel 22 of the panel assembly 2.

It is to be understood, in the preferred embodiment, the automatic switching device can be arranged on the control panel. In other words, the automatic switching device can also serve as a control panel in another embodiment.

It is to be understood, in the preferred embodiment, the control panel can just integrate the lock assemblies with the first switch unit, or just integrate the starting switch 71 with the first starting unit, or just integrate the motor rotation switch 81 with the second starting unit. Of course, the control panel can integrate any two of or all of the components in above embodiments. That is, no limitation is required.

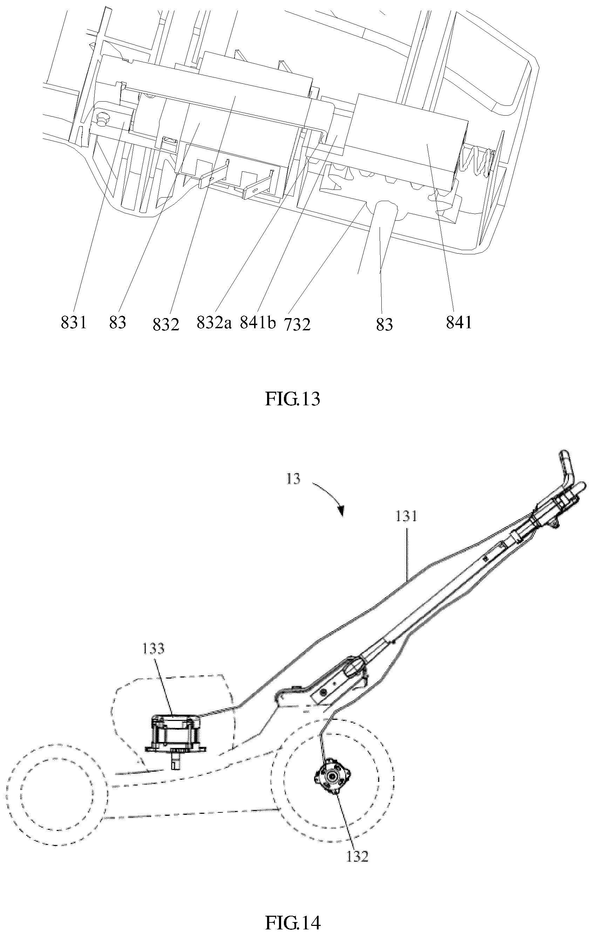

Referring to FIG. 14, an embodiment of the present invention also discloses a power device 13. The power device 13 comprises a housing 131, a first motor 132 and a second motor 133 located in the housing 131, and a control panel. The first motor 132 is adapted to provide self-propelled power, and the second motor 133 is adapted to provide working power for the power device 13.

Referring to FIG. 1, the control panel comprises a push rod 1 extending outward from the inner of the housing 131, and a guideway 3 fixed on the push rod 1, and a panel assembly 2 sliding along the guideway 3. The control panel further comprises lock assemblies connected to the panel assembly 2. They are adapted to lock or unlock the panel assembly 2 on the push rod 1, so that the power device 13 is switched between a manual-power driving mode and a self-propelled driving mode.

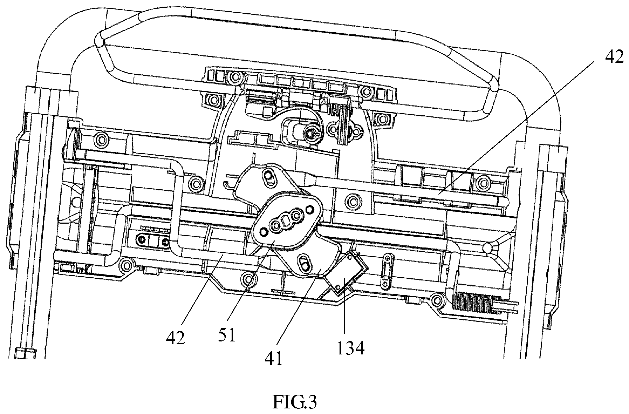

Referring to FIG. 3 and FIG. 14, in one embodiment of the present invention, the power device 13 further comprises a self-propelled switch 134. The self-propelled switch 134 is electrically connected with the lock assemblies and the first motor 132, and it is adapted to start or close the first motor.

In one embodiment of the present invention, the power device 13 can be in a self-propelled driving mode by operating the self-propelled switch 134. When the power device 13 is in the self-propelled driving mode, the lock assemblies are also adapted to fix the self-propelled speed of the power device 13 at different values, so that the power device 13 can be switched in the variable speed self-propelled driving mode and the constant speed self-propelled driving mode to further improve the user experience.

During applying the present invention, the lock assemblies are configured to fix the self-propelling speed of the power device 13 at different values, and the lock assemblies can be in several different structures. In one embodiment of the invention, the self-propelling speed of the power device 13 can be fixed at different values by fixing the panel assembly 2 at different positions onto the push rod 1.

During applying the present invention, a number of positioning holes can be arranged at different positions of the push rod 1, and the lock assemblies can lock the panel assembly 2 at different positioning holes, in such a manner that fixed the self-propelling speed of the power device 13 at different values.

Referring to FIG. 3, in one embodiment of the present invention, the lock assemblies comprise a lock knob 41 connected to the panel assembly 2, and at least one lock shaft 42 connected to the lock knob 41 and clamped with the push rod 1.

When the lock shaft 42 enters into the push rod 1, the panel assembly 2 is locked on the push rod 1. When the lock shaft 42 exits from the push rod, the panel assembly 2 can automatically slide along the push rod 1. That is, the panel assembly 2 is unlocked.

During applying the present invention, the lock knob 41 of the power device 13 can be arranged in conjunction with the self-propelled switch 134, that is, the on-off of the self-propelled switch 134 can be controlled by the rotation of the lock knob 41.

For example, when the power device 13 needs to be operated, the operator can operate the self-propelled key 51 by turning the self-propelled key knob 54. The lock knob 41 is driven to rotate by the rotation of the self-propelled key 51 and touch the self-propelled switch 134. When the first motor 132 is started, the power device 13 can switch between a variable speed self-propelled driving mode and a constant speed self-propelled driving mode by operating the lock knob 41.

During applying the present invention, when the panel assembly 2 is locked at a certain position of the push rod 1, the power device 13 operates in a constant speed self-propelled driving mode. When the panel assembly 2 is not locked onto the push rod 1, the power device 13 operates in a variable speed self-propelled driving mode.

During applying the present invention, the paces of the triggering of the self-propelled switch 134 and the unlocking of the lock shaft 42 can be synchronized or not. That is, no limitation is required. Taking the triggering of the self-propelled switch 134 and unlocking of the lock shaft 42 be synchronized as an example, while the lock knob 41 touches the self-propelled switch 134, the lock shaft 42 connected with the lock knob 41 can be unlocked from the push rod 1. At this moment, the control panel can slide along the handle. When the self-propelled switch 134 is closed, the first motor 132 is in standby state, and the rotating speed of the first motor 132 is zero.

During applying the present invention, the lock knob 41 and the self-propelled switch 134 of the power device 13 can also be non-linkage setting. Such as, a separate external switch can be arranged to start or close the self-propelled switch 134, or the self-propelled switch 134 can be directly operated. At this time, the rotating and closing of the lock knob 41 do not affect the on-off of the self-propelled switch 134.

During applying the present invention, the self-propelled speed range of the power device 13 can be within [0, 3.5km/s].

During applying the present invention, the lock knob 41 and the lock shaft 42 can be implemented with reference to the description of the lock assemblies in the above embodiment of the control panel. It will not be described in detail here.

Referring to FIG. 3, in one embodiment of the present invention, the panel assembly 2comprises a first switch unit connected to the lock knob 41. The first switch unit is adapted to control the lock shaft 42 locking or unlocking of the panel assembly 2 through operating the lock knob 41.

During applying the present invention, the first switch unit comprises a self-propelled key 51 connected to the lock knob 41.

During applying the present invention, the self-propelled key 51 is clamped with the lock knob 41, and the lock knob 41 is driven to rotate by rotating the self-propelled key 51.

During applying the present invention, the self-propelled key 51 can be implemented with reference to the description of the first switch unit in the above embodiment of the control panel. It will not be described in detail here.

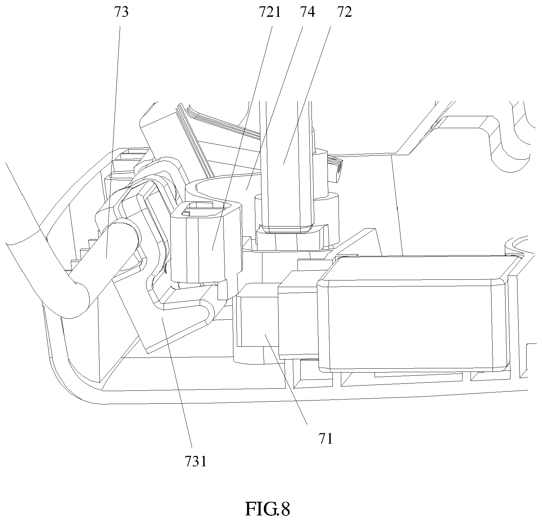

Referring to FIG. 8, in one embodiment of the present invention, the panel assembly 2 comprises a starting switch 71 being adapted to start or close the second motor 133 and a first starting unit. The first starting unit comprises a starting key 72 disposed on the panel assembly 2 and being moveable up and down, and a pull rod 73 movably connected to the panel assembly 2.

When the starting key 72 moves to a bottom of the panel assembly 2, the bottom of the starting key 72 will touch and start the starting switch 71 under a push of the bottom of the pull rod 73, and the starting switch 71 will be closed when the bottom of the starting key 72 is disconnected from the starting switch 71.

During applying the present invention, the pull rod 73 comprises a compression block 731 being adapted to push the starting key 72 to touch the starting switch 71 as the pull rod 73 rotating. A distance between the starting switch 71 and the compression block 731 is larger than the displacement distance of the compression block 731 caused by the rotation thereof.

During applying the present invention, the starting key 72 and the pull rod 73 can be implemented with reference to the description of the first starting unit in the above embodiment of the control panel. It will not be described in detail here.

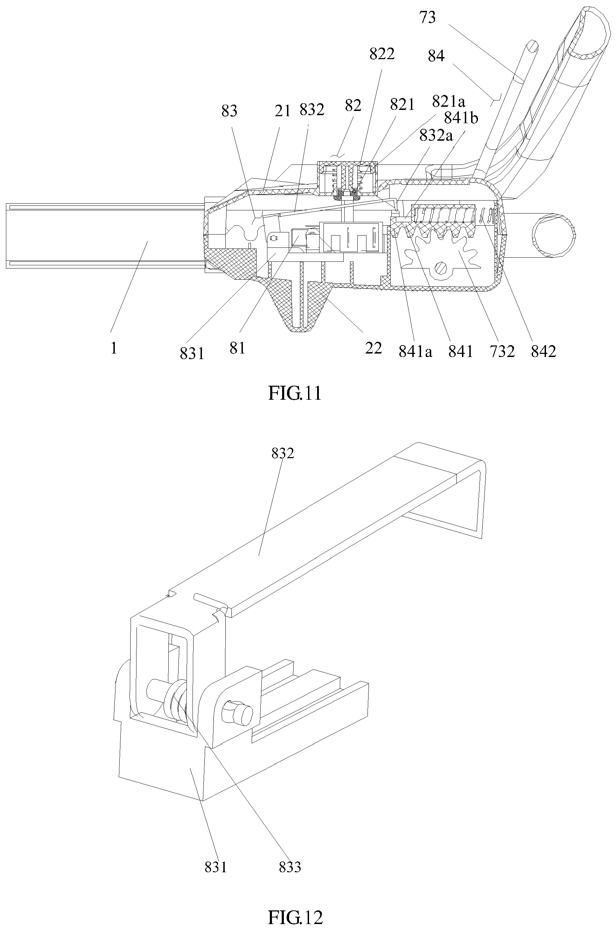

Referring to FIG. 11, in one embodiment of the present invention, the panel assembly 2 comprises a motor rotation switch 81 arranged in the panel assembly 2. The motor rotation switch 81 is adapted to start or close the first motor.

A second starting unit is disposed on the panel assembly 2. The second starting unit comprises a button unit 82, a connecting assembly 83, and an operating assembly 84, wherein the button unit 82 moves downwards to press the connecting assembly 83 to make the connecting assembly 83 connected with the operating assembly 84. The connecting assembly 83 is driven to move and press on the motor rotation switch 81 by moving the operating assembly 84, in such a manner that the motor rotation switch 81 is triggered.

During applying the present invention, the button unit 82, the connecting assembly 83, and the operating assembly 84 can be implemented with reference to the description of the second starting unit in the above embodiment of the automatic switching device. It will not be described in detail here.

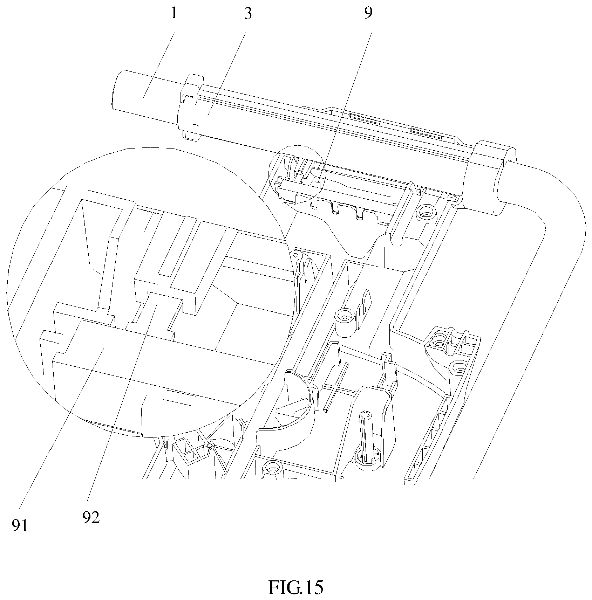

Referring to FIG. 15, in one embodiment of the present invention, the panel assembly 2 comprises a sliding potentiometer 9 connected to the first motor 132. The sliding potentiometer 9 comprises a potentiometer base 91 and a sliding needle 92 movably connected to the potentiometer base 91. According to the moving distance of the sliding needle 92 on the potentiometer base 91, the rotation speed of the first motor 132 is changed to adjust the self-propelling speed of the power device 13.

During applying the present invention, the relative displacement distance between the panel assembly 2 and the guideway 3 is represented by S1 as the preset first distance, and the relative displacement distance between the panel assembly 2 and the guideway 3 is represented by S2 as the maximum distance. When the relative displacement distance between the panel assembly 2 and the guideway 3 is within [0, s1], it is called the front adjusting distance, and when the relative displacement distance between the panel assembly 2 and the guideway 3 is within [s1, s2], it is called the rear adjusting distance.

In one embodiment of the present invention, the acceleration of the sliding needle 92 as moving within the front adjusting distance is less than the acceleration of the sliding needle 92 as moving within the rear adjusting distance, in such a manner that avoiding the power device 13 moving too fast to cause danger as moving within the front adjusting distance. The safety can be further improved.

In one embodiment of the present invention, the potentiometer base 91 can be fixed on the panel assembly 2, and one end of the sliding needle 92 can be fixed on the guideway 3.

In one embodiment of the present invention, the potentiometer base 91 can be fixed on the guideway 3, and one end of the sliding needle 92 is fixed on the panel assembly 2.

In one embodiment of the present invention, the panel assembly 2 also can comprise a reset apparatus arranged between the two guideways 3 on both sides of the push rod 1, and the reset apparatus is adapted to reset the location of the panel assembly 2.

During applying the present invention, the reset apparatus comprises a reset rod 101 connected with the panel assembly 2 and the push rod 1, and a reset rod return spring 102 sleeved on the reset rod 101. One end of the reset rod return spring 102 is connected with the push rod 1.

The reset rod 101 is driven to rotate around the push rod 1 by the movement of the panel assembly 2, and the reset rod 101 is driven to rotate back by the reset rod return spring 102, in such a manner that the panel assembly 2 moves back to its original position.

In one embodiment of the present invention, the reset rod 101 comprises a main rod 101a connected with the panel assembly 2 and a pair of auxiliary rods 101b arranged at both ends of the main rod 101a. The auxiliary rods 101 are connected with the push rod 1.

During applying the present invention, the auxiliary rod 101b can be movably connected to the mounting hole in the push rod 1 and can rotate around the mounting hole. The main rod 101a can be clamped with the panel assembly 2. When the panel assembly 2 moving, the reset rod 101 actively rotates around the push rod 1, and the reset rod 101 is drive to rotate back by the reset rod return spring 102, in such a manner that driving the panel assembly 2 move back to its original position.

During applying the present invention, the main rod 101a and the auxiliary rod 101b can be integrated into one. The main rod 101a can be cylindrical, and the cross section of the auxiliary rod 101b can be L-shaped.

During applying the present invention, both ends of the upper panel 21 and the lower panel 22 of the panel assembly 2 can be movably connected to the guideway 3.

During applying the present invention, a chuck 103 can be arranged on the lower panel 22 of the panel assembly 2, and the reset rod 101 can be partially fitted and installed in the chuck 103.

During applying the present invention, a chuck 103 can be arranged on the upper panel 21 of the panel assembly 2, and the reset rod 101 can be partially fitted and installed in the chuck 103.

In one embodiment of the present invention, the power device 13 can be garden tools.

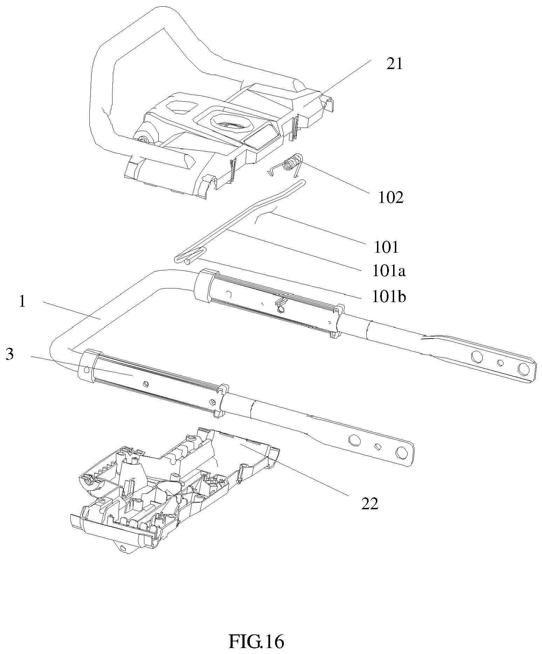

During applying the present invention, the garden tool can be a lawn mower as shown in FIG. 16, or a snow sweeper, a soil loosener, a lawn harrower or any other kinds of wheeled driving device.

Taking the power device 13 as a lawn mower as an example, the working principle of the lawn mower is described in detail as follows:

During applying the present invention, the lawn mower usually comprises a first motor for providing self-propelled power and a second motor for providing the working power for the equipment. The first motor and the second motor are usually driven independently.

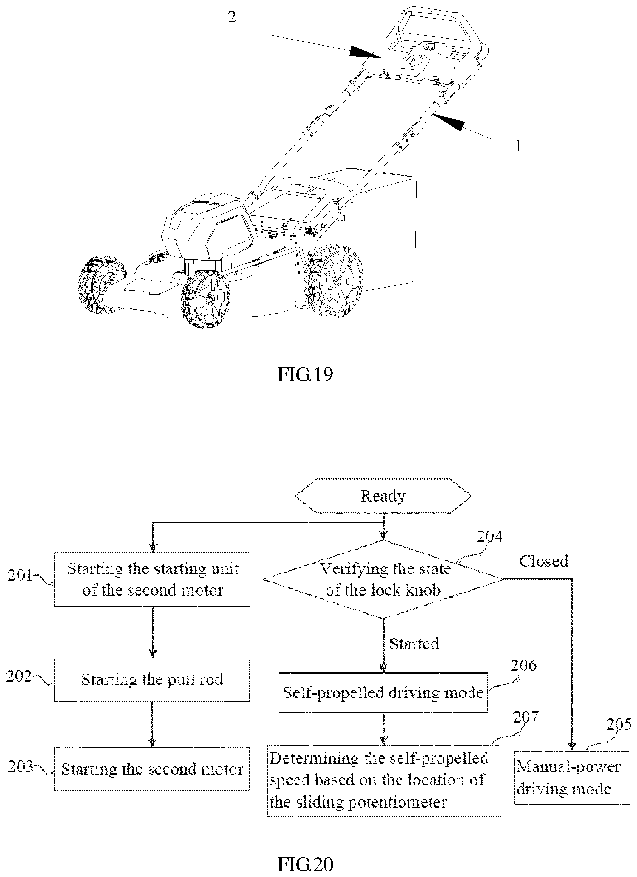

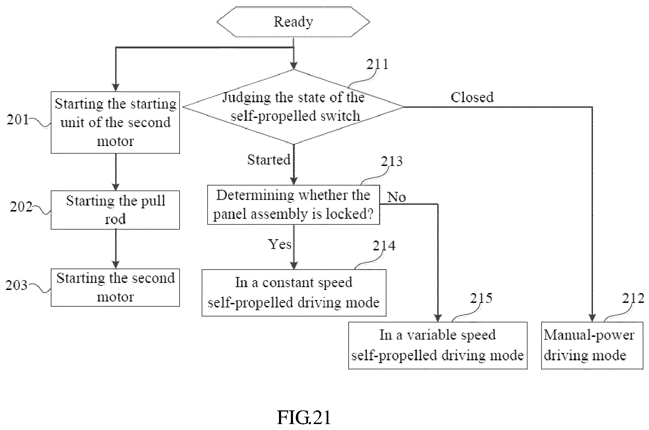

Referring to FIG. 20 and FIG. 21, in one embodiment of the present invention, the driving process of the second motor is described as follows:

Step 201, start the starting unit of the second motor.

During applying the present invention, the starting unit of the second motor can be the first starting unit in the above-mentioned embodiment, or it can be the second starting unit in the above-mentioned embodiment. That is, no limitation is required.

Taking the starting unit of the second motor as the second starting unit as an example, the hanging plate can be operated to clamp with the pulling plate by pressing the button assembly, in such a manner that starting the starting unit of the second motor.

Step 202, start the pull rod.

During applying the present invention, the motor rotation switch can be triggered by starting the pull rod and then the sliding plate is driven to move on the panel assembly by the hanging plate driven by the pulling plate.

Step 203, start the second motor.

During applying the present invention, the second motor can be triggered to start working by operating the motor rotation switch. As the second motor is started, the lawn mower can perform mowing work.

It is to be understood, during applying the present invention, according to the driving state of the first motor, the driving mode of the lawn mower can be determined. In other words, the lawn mower that the second motor has started, either work in manual-power driving mode, or work in constant speed self-propelled driving mode or in variable speed self-propelled driving mode.

Referring to FIG. 20, in one embodiment of the present invention, the driving process of the first motor is described as follows:

Step 204, verify the state of the lock knob.

If the lock knob is not turned on, execute step 205, otherwise step 206 is executed.

Step 205, the lawn mower works under the manual-power driving mode.

When the lock knob is not turned on, the self-propelled safety is not turned on. The self-propelled key knob points to the right 45°in front of the panel assembly, and the lock shafts on the left and right are inserted into the holes of the push rod. At this moment, the whole panel assembly cannot slide along the push rod. The first motor is in the closed state. And the lawn mower works in the manual-power driving mode.

Step 206, the lawn mower works under the self-propelled driving mode.

During applying the present invention, the self-propelled key can be driven to separate from the positioning holes by the operator pressing down the self-propelled key knob. The buckle body on the bottom of the self-propelled key can be driven to engage in the buckle slot of the lock knob by rotating the self-propelled key knob. At this moment, the self-propelled key is driven to rotate by continually rotating of the self-propelled key knob, in such a manner that the self-propelled key knob is rotating, the lock shafts connected with the self-propelled key knob are driven to compress and separate from the push rod by rotating the self-propelled key knob. At this moment, the panel assembly is unlocked and can freely slide on the push rod.

When releasing the self-propelled key knob, the self-propelled key is ejected from the lock knob under the action of the key reset spring. The self-propelled key is inserted into the corresponding positioning holes of the self-propelled key through the positioning columns, and enters in the self-propelled driving mode.

Step 207, determine the self-propelled speed based on the location of the sliding potentiometer.

During applying the present invention, the panel assembly is driven to slide forward along the guideway on the push rod through the operator pushing the panel assembly, in such a manner that, the reset rod being driven to rotate forward by the sliding of the panel assembly. When the external force stops pushing the panel assembly, the reset rod will rotate backward under the action of torsional spring force. At this moment, the reset rod the panel assembly can be driven to slide backward along the guideway to the original position.

When the panel assembly moves on the guideway, the sliding needle of the sliding potentiometer is driven to slide on the potentiometer base by the movement of the panel assembly, and producing relative displacement. According to the moving distance of the sliding needle on the potentiometer base, the first motor determines the self-propelled speed of the lawn mower. The larger the moving distance of the panel assembly on the guideway, the larger the stroke of the sliding potentiometer, and the faster the self-propelled speed of the lawn mower.

When the first motor needs to be shut down, the panel assembly is reset. Then the left lock shaft on the lock knob is inserted into the push rod by turning the self-propelled key. Then the self-propelled key returns to its original position by releasing the self-propelled key knob. The first motor is closed.

Referring to FIG. 21, in one embodiment of the present invention, the driving process of the first motor is described as follows:

Step 211, judge the self-propelled switch state.

When the self-propelled switch is off, step 212 is executed. Otherwise, step 213 is executed.

Step 212, the lawn mower works under the manual-power driving mode.

Step 213, determine whether the panel assembly is locked.

When the panel assembly moves on the guideway, the sliding needle of the sliding potentiometer is driven to slide on the potentiometer base by the movement of the panel assembly, and producing relative displacement. According to the moving distance of the sliding needle on the potentiometer base, the first motor determines the self-propelled speed of the lawn mower. The larger the moving distance of the panel assembly on the guideway, the larger the stroke of the sliding potentiometer, and the faster the self-propelled speed of the lawn mower.

When the panel assembly is locked, step 214 is executed. Otherwise, step 215 is executed.

Step 214, the lawn mower is in a constant speed self-propelled driving mode.

At this moment, according to the different positions of the panel assembly fixed on the push rod, the self-propelled speed can be determined. And in such a manner that the device working in constant speed self-propelled driving mode.

Step 215, the lawn mower is in a variable speed self-propelled driving mode.

When the panel assembly is unlocked, the lawn mower is in a variable speed self-propelled driving mode.

When the first motor needs to be shut down, the self-propelled switch can be used to unlock the panel assembly and put the panel assembly back to its original position. At this moment, the pull rod is loosened, and the starting unit of the second motor is closed. And the lawn mower stops working.

## Claims

1. A power device (13), comprising:
a machine body;
a housing (131), a first motor (132) and a second motor (133) located in the housing (131), the first motor (132) is adapted to provide self-propelled power, and the second motor (133) is adapted to provide working power for the power device (13); and
a control panel, the control panel including:
a pushing rod (1) connected to the machine body,
a panel assembly (2) reciprocatingly sliding on the pushing rod (1); and
a sliding potentiometer (9) connected to the first motor (132);
wherein the sliding potentiometer (9) comprises a potentiometer base (91) and
a sliding needle (92) movably connected to the potentiometer base (91), and
wherein the first motor (132) is configured to adjust the rotation speed to adjust the self-propelling speed of the power device (13) according to the moving distance of the sliding needle (92) on the potentiometer base (91) , wherein the control panel comprises a guideway (3) fixed on the pushing rod (1), and the panel assembly (2) sliding along the guideway (3), **characterized in that** the acceleration of the sliding needle (92) as moving within [0, s1] is less than the acceleration of the sliding needle (92) as moving within [s1, s2], wherein S1 represents a relative displacement distance between the panel assembly (2) and
the guideway (3) as a preset first distance, and S2 represents a relative displacement distance between the panel assembly (2) and the guideway (3) as a maximum distance.

2. The power device (13) according to claim 1, wherein the potentiometer base (91) is fixed on the panel assembly (2), and one end of the sliding needle (92) is fixed on the guideway (3).

3. The power device (13) according to claim 1, wherein the potentiometer base (91) is fixed on the guideway (3), and one end of the sliding needle (92) is fixed on the panel assembly (2).

4. The power device (13) according to claim 1, wherein the power device (13) further comprises a reset apparatus arranged between two guideways (3) arranged on both sides of the pushing rod (1), the reset apparatus is adapted to reset the location of the panel assembly (2).

5. The power device (13) according to claim 4, wherein the reset apparatus comprises a reset rod (101) connected with the panel assembly (2), the pushing rod (1) and a reset rod return spring (102) sleeved on the reset rod (101), one end of the reset rod return spring (102) is connected with the pushing rod (1).

6. The power device (13) according to claim 5, wherein the reset rod (101) is drivable to rotate around the pushing rod (1) by the movement of the panel assembly (2), and the reset rod (101) is drivable to rotate back by the reset rod return spring (102), in such a manner that the panel assembly (2) is moveable back to its original position.

7. The power device (13) according to claim 6, wherein the reset rod (101) comprises a main rod (101a) connected with the panel assembly (2) and a pair of auxiliary rods (101b) arranged at both ends of the main rod (101a), the auxiliary rods (101) are connected with the pushing rod (1).

8. The power device (13) according to claim 7, wherein the auxiliary rod (101b) is movably connected to a mounting hole in the pushing rod (1) and is rotatable around the mounting hole, the main rod (101a) is clampable with the panel assembly (2), and when the panel assembly (2) is moving, the reset rod (101) is actively rotatable around the pushing rod (1), and the reset rod (101) is drivable to rotate back by the reset rod return spring (102), in such a manner that driving the panel assembly (2) is movable back to its original position.

9. The power device (13) according to any one of claims 1 to 8, wherein the panel assembly (2) comprises a starting switch (71) being adapted to start or close the second motor (133) and a first starting unit, the first starting unit comprises a starting key (72) disposed on the panel assembly (2) and being moveable up and down, and a pull rod (73) movably connected to the panel assembly (2).

10. The power device (13) according to claim 9, wherein when the starting key (72) moves to a bottom of the panel assembly (2), the bottom of the starting key (72) will touch and start the starting switch (71) under a push of the bottom of the pull rod (73), and the starting switch (71) will be closed when the bottom of the starting key (72) is disconnected from the starting switch (71).

11. The power device (13) according to claim 10, wherein the pull rod (73) comprises a compression block (731) being adapted to push the starting key (72) to touch the starting switch (71) as the pull rod (73) rotating, a distance between the starting switch (71) and the compression block (731) is larger than the displacement distance of the compression block (731).

12. The power device (13) according to any one of claim 1-11, wherein the power device (13) is one of a lawn mower, a snow sweeper, a soil loosener or a lawn harrower.

## Patentansprüche

1. Leistungsvorrichtung (13), umfassend:
einen Maschinenkörper;
ein Gehäuse (131), einen ersten Motor (132) und einen zweiten Motor (133), die sich in dem Gehäuse (131) befinden, wobei der erste Motor (132) geeignet ist, Selbstfahrleistung bereitzustellen, und der zweite Motor (133) geeignet ist, Arbeitsleistung für die Leistungsvorrichtung (13) bereitzustellen; und
eine Bedienungsplatte, wobei die Bedienungsplatte beinhaltet:
eine Schubstange (1), die mit dem Maschinenkörper verbunden ist,
eine Plattenanordnung (2), die sich auf der Schubstange (1) gleitend hin- und herbewegt; und
ein Schiebepotentiometer (9), das mit dem ersten Motor (132) verbunden ist;
wobei das Schiebepotentiometer (9) eine Potentiometerbasis (91) und eine Schiebenadel (92) umfasst, die beweglich mit der Potentiometerbasis (91) verbunden ist, und wobei der erste Motor (132) dazu konfiguriert ist, die Drehzahl anzupassen, um die Selbstfahrgeschwindigkeit der Leistungsvorrichtung (13) gemäß der Bewegungsdistanz der Schiebenadel (92) an der Potentiometerbasis (91) anzupassen, wobei das Bedienfeld eine Führungsbahn (3) umfasst, die an der Schubstange (1) befestigt ist, und die Plattenanordnung (2) entlang der Führungsbahn (3) gleitet, **dadurch gekennzeichnet, dass** die Beschleunigung der Schiebenadel (92), wenn sie sich innerhalb von [0, s1] bewegt, geringer ist als die Beschleunigung der Schiebenadel (92), wenn sie sich innerhalb von [s1, s2] bewegt, wobei S1 eine relative Verlagerungsdistanz zwischen der Plattenanordnung (2) und der Führungsbahn (3) als eine voreingestellte erste Distanz darstellt und S2 eine relative Verlagerungsdistanz zwischen der Plattenanordnung (2) und der Führungsbahn (3) als eine maximale Distanz darstellt.

2. Leistungsvorrichtung (13) nach Anspruch 1, wobei die Potentiometerbasis (91) an der Plattenanordnung (2) befestigt ist, und ein Ende der Schiebenadel (92) an der Führungsbahn (3) befestigt ist.

3. Leistungsvorrichtung (13) nach Anspruch 1, wobei die Potentiometerbasis (91) an der Führungsbahn (3) befestigt ist, und ein Ende der Schiebenadel (92) an der Plattenanordnung (2) befestigt ist.

4. Leistungsvorrichtung (13) nach Anspruch 1, wobei die Leistungsvorrichtung (13) weiter eine Rückstelleinrichtung umfasst, die zwischen zwei Führungsbahnen (3) angeordnet ist, die auf beiden Seiten der Schubstange (1) angeordnet sind, wobei die Rückstelleinrichtung geeignet ist, die Lage der Plattenanordnung (2) zurückzustellen.

5. Leistungsvorrichtung (13) nach Anspruch 4, wobei die Rückstelleinrichtung eine Rückstellstange (101), die mit der Plattenanordnung (2) verbunden ist, die Schubstange (1) und eine Rückstellstangenrückholfeder (102) umfasst, die auf die Rückstellstange (101) aufgemufft ist, wobei ein Ende der Rückstellstangenrückholfeder (102) mit der Schubstange (1) verbunden ist.

6. Leistungsvorrichtung (13) nach Anspruch 5, wobei die Rückstellstange (101) so angetrieben werden kann, dass sie sich durch die Bewegung der Plattenanordnung (2) um die Schubstange (1) dreht, und die Rückstellstange (101) so angetrieben werden kann, dass sie sich durch die Rückstellstangenrückholfeder (102) derart zurückdreht, dass die Plattenanordnung (2) in ihre ursprüngliche Position zurückbewegt werden kann.

7. Leistungsvorrichtung (13) nach Anspruch 6, wobei die Rückstellstange (101) eine Hauptstange (101a), die mit der Plattenanordnung (2) verbunden ist, und ein Paar Hilfsstangen (101b) umfasst, die an beiden Enden der Hauptstange (101a) angeordnet sind, wobei die Hilfsstangen (101) mit der Schubstange (1) verbunden sind.

8. Leistungsvorrichtung (13) nach Anspruch 7, wobei die Hilfsstange (101b) beweglich mit einem Montageloch in der Schubstange (1) verbunden ist und um das Montageloch herum gedreht werden kann, wobei die Hauptstange (101a) mit der Plattenanordnung (2) verklemmt werden kann, und wenn die Plattenanordnung (2) sich bewegt, die Rückstellstange (101) aktiv um die Schubstange (1) herum gedreht werden kann, und die Rückstellstange (101) so angetrieben werden kann, dass sie sich durch die Rückstellstangenrückholfeder (102) derart zurückdreht, dass der Antrieb der Plattenanordnung (2) in seine ursprüngliche Position zurückbewegt werden kann.

9. Leistungsvorrichtung (13) nach einem der Ansprüche 1 bis 8, wobei die Plattenanordnung (2) einen Startschalter (71), der geeignet ist, den zweiten Motor (133) zu starten oder zu schließen, und eine erste Starteinheit umfasst, wobei die erste Starteinheit einen Startschlüssel (72), der auf der Plattenanordnung (2) angeordnet ist und nach oben und unten bewegt werden kann, und eine Zugstange (73) umfasst, die beweglich mit der Plattenanordnung (2) verbunden ist.

10. Leistungsvorrichtung (13) nach Anspruch 9, wobei, wenn sich der Startschlüssel (72) zu einer Unterseite der Plattenanordnung (2) bewegt, die Unterseite des Startschlüssels (72) den Startschalter (71) berührt und diesen unter einem Druck der Unterseite der Zugstange (73) startet, und der Startschalter (71) geschlossen wird, wenn die Unterseite des Startschlüssels (72) vom Startschalter (71) getrennt wird.

11. Leistungsvorrichtung (13) nach Anspruch 10, wobei die Zugstange (73) einen Kompressionsblock (731) umfasst, der geeignet ist, den Startschlüssel (72) zu drücken, um den Startschalter (71) zu berühren, wenn sich die Zugstange (73) dreht, wobei eine Distanz zwischen dem Startschalter (71) und dem Kompressionsblock (731) größer ist als die Verlagerungsdistanz des Kompressionsblocks (731).

12. Leistungsvorrichtung (13) nach einem der Ansprüche 1-11, wobei die Leistungsvorrichtung (13) eines von einem Rasenmäher, einem Schneekehrer, einem Bodenlockerer oder einer Rasenegge ist.

## Revendications

1. Dispositif d'alimentation (13), comprenant :
un corps de machine ;
un carter (131), un premier moteur (132) et un second moteur (133) situés dans le carter (131), le premier moteur (132) est conçu pour fournir une puissance automotrice et le second moteur (133) est conçu pour fournir une puissance de travail audit dispositif d'alimentation (13) ; et
un panneau de commande, le panneau de commande incluant :
une tige de poussée (1) reliée au corps de machine,
un ensemble panneau (2) coulissant en va-et-vient sur la tige de poussée (1) ; et
un potentiomètre coulissant (9) connecté au premier moteur (132) ;
dans lequel le potentiomètre coulissant (9) comprend une base de potentiomètre (91) et une aiguille coulissante (92) connectée de manière mobile à la base de potentiomètre (91) et dans lequel le premier moteur (132) est configuré pour ajuster la vitesse de rotation pour ajuster la vitesse automotrice du dispositif d'alimentation (13) en fonction de la distance de déplacement de l'aiguille coulissante (92) sur la base de potentiomètre (91), dans lequel le panneau de commande comprend une glissière de guidage (3) fixée sur la tige de poussée (1), et l'ensemble panneau (2) coulissant le long de la glissière de guidage (3), **caractérisé en ce que** l'accélération de l'aiguille coulissante (92) lorsqu'elle se déplace dans [0, s1] est inférieure à l'accélération de l'aiguille coulissante (92) lorsqu'elle se déplace dans [s1, s2], dans lequel S1 représente une distance de déplacement relative entre l'ensemble panneau (2) et la glissière de guidage (3) en tant que première distance prédéfinie, et S2 représente une distance de déplacement relative entre l'ensemble panneau (2) et la glissière de guidage (3) en tant que distance maximale.

2. Dispositif d'alimentation (13) selon la revendication 1, dans lequel la base de potentiomètre (91) est fixée sur l'ensemble panneau (2), et une extrémité de l'aiguille coulissante (92) est fixée sur la glissière de guidage (3).

3. Dispositif d'alimentation (13) selon la revendication 1, dans lequel la base de potentiomètre (91) est fixée sur la glissière de guidage (3) et une extrémité de l'aiguille coulissante (92) est fixée sur l'ensemble panneau (2).

4. Dispositif d'alimentation (13) selon la revendication 1, dans lequel le dispositif d'alimentation (13) comprend en outre un appareil de rétablissement agencé entre deux glissières de guidage (3) agencées des deux côtés de la tige de poussée (1), l'appareil de rétablissement est conçu pour rétablir l'emplacement de l'ensemble panneau (2).

5. Dispositif d'alimentation (13) selon la revendication 4, dans lequel l'appareil de rétablissement comprend une tige de rétablissement (101) connectée à l'ensemble panneau (2), la tige de poussée (1) et un ressort de rappel de tige de rétablissement (102) emmanché sur la tige de rétablissement (101), une extrémité du ressort de rappel de tige de rétablissement (102) est connectée à la tige de poussée (1).

6. Dispositif d'alimentation (13) selon la revendication 5, dans lequel la tige de rétablissement (101) peut être amenée à tourner autour de la tige de poussée (1) par le déplacement de l'ensemble panneau (2), et la tige de rétablissement (101) peut être amenée à tourner en arrière par le ressort de rappel de tige de rétablissement (102), de telle manière que l'ensemble panneau (2) puisse revenir à sa position d'origine.

7. Dispositif d'alimentation (13) selon la revendication 6, dans lequel la tige de rétablissement (101) comprend une tige principale (101a) connectée à l'ensemble panneau (2) et une paire de tiges auxiliaires (101b) agencées aux deux extrémités de la tige principale (101a), les tiges auxiliaires (101) sont connectées à la tige de poussée (1).

8. Dispositif d'alimentation (13) selon la revendication 7, dans lequel la tige auxiliaire (101b) est connectée de manière mobile à un trou de montage dans la tige de poussée (1) et peut tourner autour du trou de montage, la tige principale (101a) peut être serrée avec l'ensemble panneau (2), et lorsque l'ensemble panneau (2) se déplace, la tige de rétablissement (101) peut tourner activement autour de la tige de poussée (1), et la tige de rétablissement (101) peut être amenée à tourner en arrière par le ressort de rappel de tige de rétablissement (102), de telle manière que l'ensemble panneau (2) puisse revenir à sa position d'origine.

9. Dispositif d'alimentation (13) selon l'une quelconque des revendications 1 à 8, dans lequel l'ensemble panneau (2) comprend un commutateur de démarrage (71) agencé pour démarrer ou fermer le second moteur (133) et une première unité de démarrage, la première unité de démarrage comprend une clé de démarrage (72) disposée sur l'ensemble panneau (2) et pouvant être déplacée vers le haut et vers le bas, et une tige de traction (73) connectée de manière mobile à l'ensemble panneau (2).

10. Dispositif d'alimentation (13) selon la revendication 9, dans lequel, lorsque la clé de démarrage (72) se déplace vers une partie inférieure de l'ensemble panneau (2), la partie inférieure de la clé de démarrage (72) va venir toucher et démarrer le commutateur de démarrage (71) sous l'effet d'une poussée de la partie inférieure de la tige de traction (73), et le commutateur de démarrage (71) sera fermé lorsque la partie inférieure de la clé de démarrage (72) est déconnectée du commutateur de démarrage (71).

11. Dispositif d'alimentation (13) selon la revendication 10, dans lequel la tige de traction (73) comprend un bloc de compression (731) conçu pour pousser la clé de démarrage (72) à toucher le commutateur de démarrage (71) lorsque la tige de traction (73) tourne, une distance entre le commutateur de démarrage (71) et le bloc de compression (731) est supérieure à une distance de déplacement du bloc de compression (731).

12. Dispositif d'alimentation (13) selon l'une quelconque des revendications 1-11, dans lequel le dispositif d'alimentation (13) est l'un d'une tondeuse, d'une balayeuse souffleuse, d'un ameublisseur de sol ou d'une herse scarificateur de pelouse.
